(19) Europäisches Patentamt
European Patent Office
Office européen des brevets

(11) **EP 3 501 990 B1**

(12) **EUROPEAN PATENT SPECIFICATION**

(45) Date of publication and mention
of the grant of the patent:
**29.07.2020   Bulletin 2020/31**

(51) Int Cl.:
**B64D 15/20** (2006.01)

(21) Application number: **18209393.0**

(22) Date of filing: **30.11.2018**

(54) **QUANTITATIVE BLOCKAGE ANALYSIS OF A GRID IN ICING CONDITIONS**

QUANTITATIVE BLOCKIERUNGSANALYSE EINES GITTERS UNTER VEREISUNGSBEDINGUNGEN

ANALYSE QUANTITATIVE DU BLOCAGE D'UNE GRILLE DANS DES CONDITIONS DE GIVRAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2017   DE 102017130593**

(43) Date of publication of application:
**26.06.2019   Bulletin 2019/26**

(73) Proprietors:
• **Airbus Defence and Space GmbH**
**82024 Taufkirchen (DE)**
• **Airbus SAS**
**31700 Blagnac (FR)**

(72) Inventors:
• **Vercillo, Vittorio**
**82024 Taufkirchen (DE)**

• **De Andrade Jorge, Raphael**
**82024 Taufkirchen (DE)**
• **Alejandro Mayén Guillén, Javier**
**82024 Taufkirchen (DE)**
• **Laroche, Alexandre**
**82024 Taufkirchen (DE)**
• **Maiko Uehoka Entz, Ricardo**
**31700 Blagnac (FR)**
• **Bonaccurso, Elmar**
**82024 Taufkirchen (DE)**

(74) Representative: **LKGLOBAL**
**Lorenz & Kopf PartG mbB Patentanwälte**
**Brienner Straße 11**
**80333 München (DE)**

(56) References cited:
**EP-A1- 2 366 974        EP-A1- 3 061 691**
**DE-U1- 8 612 003        US-A- 5 180 122**
**US-A1- 2013 113 926**

EP 3 501 990 B1

**Description**

TECHNICAL FIELD

The invention relates to an analysis system for quantitative blockage analysis of a grid in icing conditions, an aircraft equipped with the analysis system for quantitative blockage analysis, and a method for quantitative blockage analysis of a grid in icing conditions.

BACKGROUND OF THE INVENTION

For some aircraft operators it is a desire to analyze ice accretion on grids such as an engine's air intake protection grid. Different technologies are known for monitoring ice accretion on A/C components, however, very little is known about grid icing. Two relevant documents of the prior art are EP3061691 A1 and US2013/0113926 A1.

SUMMARY OF THE INVENTION

It is an object of the invention to provide an enhanced possibility for determining an icing state of an aircraft engine's air intake protection grid.
This is solved by the subject matter of the independent claims. Advantageous embodiments and further improvements may be gathered from the sub-claims and the following description.
According to the invention, an analysis system for quantitative blockage analysis of a grid in icing conditions comprises at least one optical sensor, a processor unit and a display unit. The at least one optical sensor is configured to continuously capture a series of pictures of a grid and to submit each picture of the series of pictures to the processor unit. The processor unit is configured to determine a color scale value for each of a number of areas in at least a field of each picture, and to count a number of areas in a particular field of a particular picture that show a color scale value greater than an absolute reference value. Further, the processor unit is configured to calculate a time remaining until a critical icing condition is reached based on a model of an icing behavior of the grid and the number of areas that show a color scale value greater than the absolute reference value. The processor is further configured to calculate a warning signal based on the time remaining until the critical icing condition of the grid is reached, and to display the warning signal on the display unit.
In an example, the analysis system comprises an optical sensor, which may be a camera, such as an infrared camera or a black and white, i. e. a grey-scale camera.
Further, in an example, the analysis system comprises a processor unit, such as central processor unit (CPU). The processor unit is configured to determine a color scale value for each of a number of areas in at least one field of a picture captured by an optical sensor.

This means that the processor unit is configured to analyze a particular area, such as a pixel in a field of a picture, such as a field of interest selected by a user.
In an example, the processor unit uses an algorithm that determines a brightness of a particular area to determine the color scale value of that area in a picture. Thus, the processor unit may determine a color scale value based on a brightness value of a particular area. The brightness value may be based on information submitted by the optical sensor used to capture the picture. Alternatively or additionally, the processor unit may use an algorithm that determines a color of a particular area to determine the color scale value. Thus, the processor unit may determine a color scale value based on color value of a particular area. The color value may be based on information submitted by the optical sensor.
In an example, the display unit may be a screen or lamp, such as an LED.
In an example, the processor unit is further configured to count a number of areas in a particular field of a particular picture that show a color scale value greater than an absolute reference value. This means that the processor compares the color space values determined for a particular area with a reference value that is an absolute value and that may be given or that may be dynamically determined by the processor unit using at least one reference picture, for example.
In the context of the present invention, an absolute reference value is an absolute value of a reference value that may be pre-given or that may be dynamically calculated based on at least one reference picture, for example. This means, in an example, the absolute reference value may vary over time.
Based on the comparison of a color scale value of a particular area and a particular reference value, the processor unit determines if the color scale value of the particular area is greater than, equal to or smaller than the absolute reference value. Since a color scale value that is greater than the absolute reference value means that a respective area is iced, i. e. frozen over, the processor unit is configured to count all iced areas, i. e. all areas that show a color scale value greater than the absolute reference value.
In an example, the analysis system is further configured to calculate a warning signal that is indicative of a time remaining until a critical icing condition of the grid is reached. To calculate the warning signal, the processor unit is configured to calculate the time remaining until the critical condition is reached based on a model of an icing behavior of the grid that is based on a fitting parameter determined for the grid and that is used to extrapolate the time remaining until the critical icing condition is reached.
By using a model that receives particular areas classified as ice or any value indicative of the particular areas that are classified as ice as an input signal, the model can be used to calculate a time remaining until a critical icing condition, such as a total blocking or a 80% blocking, preferably a 90% blocking, more preferably a 95% blocking or any other blocking condition that is defined as a critical blocking condition is reached. Thus, the critical icing or blocking condition may be a pre-given threshold selected by a pilot, for example.

The model may be based on information about an icing behavior of a particular grid. This information may be pre-given or may be calculated based on an icing behavior measured in a time-window after an icing of the grid has been recognized for the first time, for example. Of course, the model may be updated dynamically by resetting the time window for measuring the icing behavior of the grid.

Based on the remaining time calculated by the model, a signal can be displayed on a display unit, such as a pilot display in a cockpit of an aircraft that is indicative of the remaining time. This means, that a pilot is informed about the time remaining until a critical blockage condition of a grid that protects an air-intake of an engine of a particular aircraft is reached via the display unit.

According to an example, the model is based on a fitting parameter determined for the grid, and the processor is configured to extrapolate the time remaining until the critical icing condition is reached based on the model and the number of areas in the particular field of the particular picture that show a color scale value greater than the absolute reference value.

In an example, the processor may be configured to determine an icing signal indicative of the number of areas that show a color scale value greater than the absolute reference value. The icing signal may be a number of areas that show a color scale value greater than the absolute reference value, a percentage of areas that show a color scale value greater than the absolute reference value with respect to all areas of interest or any other mathematical description of the number of areas that show a color scale value greater than the absolute reference value.

The icing signal may comprise a graphical element that shows an amount of areas that show a color scale value greater than the absolute reference value with respect to all areas of interest. For this purpose, the icing signal may be based on a color scheme, such as green, yellow and red, wherein "green" stands for a non-critical icing condition, wherein under 21% of all areas show a color scale value greater than the absolute reference value, for example, "yellow" stands for a medium-critical icing condition, wherein over 20% and under 51% of all areas show a color scale value greater than the absolute reference value, for example, and "red" stands for a critical icing condition, wherein over 50% of all areas show a color scale value greater than the absolute reference value, for example.

In an example, the icing signal determined by the processor unit is indicative of areas that show a color scale value greater than the absolute reference value, which means that the icing signal is indicative of an amount of ice blocking a passing area for air through a grid. Thus, the icing signal is a quantitative indicator of blockage of a grid in icing conditions.

The warning signal may comprise a graphical element indicative of a remaining time until a critical icing condition is reached.

According to an example, the processor unit is configured to classify the areas that show a color scale value greater than the absolute reference value as ice and/or to classify the areas that show a color scale value smaller than or equal to the absolute reference value as background.

Preferably a grey scale value is chosen as the color scale value. Additionally, a background element may be chosen in a color that has a brightness value that results in a maximum differential brightness value with respect to a brightness value of a color of ice, such as white, for example in a particular picture captured by the optical sensor.

A classification of a color scale value of a particular area may be carried out by a classification algorithm such as a support vector machine or an artificial neural network that takes into account the color scale value of the particular area and a particular absolute reference value. This means that the output of the classification is an amount of areas that are blocked, i. e. covered by ice.

In an example, for each color scale value of a particular area in a particular field of a particular test picture captured under test conditions, a corresponding absolute reference value may be chosen that is determined for a corresponding area in a corresponding field of a given reference picture. This may allow to increase a classification accuracy of a color scale value of a particular area, particularly for grids that have a varying three-dimensional shape and, therefore, result in varying reference values for particular areas of interest.

Preferably, the optical sensor is oriented essentially parallel to an airflow towards the grid.

In an example the grid is an air-intake grid of an engine of a helicopter or an aircraft that is driven by a propeller engine or a jet engine.

In another advantageous embodiment, the processor unit is configured to calculate the icing signal based on a blockage value calculated as a ratio between a number of areas in a pre-determined blocking field that show a color scale value greater than the absolute reference value and a number of areas in the pre-determined blocking field that show a color scale value smaller than or equal to the absolute reference value.

An icing signal that is based on a blockage value may be presented to a pilot of an aircraft using an engine with an air intake that is protected by a grid that is monitored by using the analysis system as described. For this purpose, the icing signal may be displayed on a display unit in a cockpit of the aircraft.

In an example, the icing signal is shown by using a graph representing blockage values for at least one area over time.

In another advantageous embodiment the processor unit is configured to monitor and to correct light intensity variations in a particular field of areas to be analyzed between particular pictures of a series of pictures captured by the optical sensor.

Since light intensity variations in a particular field of interest may decrease an accuracy of a recognition of iced areas, an automatic correction of the light intensity in the field of interest may be used that equals the light intensity for all areas or an average value of all areas in the field of interest.

According to another example, the grid is a grid of an air-intake of an engine and the analysis system comprises at least one sensor that is positioned with respect to a flow direction of an airflow through the grid downstream of the grid. The processor unit may be configured to determine at least one differential pressure signal between a pressure of an airflow towards the grid and a pressure determined via the at least one sensor positioned downstream of the grid. The processor unit may further be configured to calculate a time until a critical performance loss of the engine, based on a rate of change of the at least one differential pressure signal.

According to another example, the processor unit may further be configured to generate a performance signal being indicative of at least the time until the critical performance loss of the engine and to submit the performance signal to the display unit. The display unit may be configured to output the performance signal submitted by the processor unit.

By using a first sensor position upstream of an air-intake grid and a second sensor positioned downstream of the air-intake grid, pressure measurements determined via the second sensor may be used to calculate a differential pressure signal based on a pressure of an airflow measured upstream of the grid, i.e. an airstream towards the grid measured by the first sensor, which may be a pitot probe, for example.

Since the airflow downstream of the air-intake grid is closely related to a performance of an engine that is protected by the air-intake grid, a differential pressure signal may be used to calculate a performance loss due to a decreasing airstream through the air-intake grid. Thus, a performance state of an engine protected by the grid may be determined and/or predicted based on the differential pressure signal.

According to an example, a rate of a change of the differential pressure signal may be calculated based on a slope of the at least one differential pressure signal.

By using the slope of a plurality of differential pressure signals, a future performance, such as a performance loss, may be predicted by extrapolating the slope.

The engine may be an engine of a helicopter or a plane. In particular, the engine may be a gas turbine engine.

In a further example, the analysis system comprises a first sensor and a second sensor. Thus, the differential pressure signal may be calculated as a differential value between a first pressure determined via the first sensor positioned upstream with respect to the grid and a second pressure determined via the second sensor positioned downstream with respect to the grid.

In an example, the first sensor may be a pitot probe.

To calculate a differential pressure signal, the first sensor and/or the second sensor may be configured to determine at least one parameter of the following list of parameters: a static pressure of the airstream into the engine, a total pressure of the airstream into the engine, and a temperature of the airstream into the engine.

In a further example, the processor unit is configured to calculate coordinates of the areas in the particular field of the particular picture that show a color scale value greater than an absolute reference value and to transmit the coordinates to a de-icing device.

A de-icing device, such as an infrared unit or a heating device may be controlled based on coordinates of the areas in the particular field of the particular picture that show a color scale value greater than an absolute reference value. In other words, the de-icing device may be pointed towards areas that are considered as ice.

In another example, the at least one pressure sensor comprises a heating.

The heating may be configured to warm up the at least one pressure sensor to protect the at least one pressure sensor from icing. The processor unit may be configured to calculate a current performance of the engine. The processor unit may be configured to calculate a performance loss, based on at least one differential pressure signal calculated after the at least one sensor was heated up over a pre-given temperature. The performance loss may be calculated with respect to a predetermined reference value, such as a current engine performance or a known engine performance at a certain temperature.

A performance loss may be calculated by using a pre-given function for a particular engine or a percentage scale of an airstream floating into the engine, for example.

According to another example, the at least one pressure sensor comprises an actuator that may be configured to rotate the at least one sensor from a first position to a second position in an opposite direction of the first position and vice versa, wherein, in the second position, the at least one sensor faces the grid. The processor unit may be configured to calculate the performance of the engine based on at least one part of the differential pressure signal determined after the at least one sensor was rotated from the first position to the second position.

According to another example, the present invention comprises a system for analysis of a power loss caused by blockage of a grid for an air-intake of an engine for an aircraft. The system comprising: at least one sensor, a processor unit and an output unit. The at least one sensor may be positioned with respect to a flow direction of an airflow through the grid downstream of the grid. Further, the processor unit may be configured to determine at least one differential pressure signal between a pressure of an airflow towards the grid and a pressure determined via the at least one sensor positioned downstream of the grid over time. Additionally, or alternatively, the processor unit may be configured to determine a blockage of the grid based on the at least one differential pressure signal.

According to the invention, also an aircraft is provided equipped with an analysis system for quantitative blockage analysis of a grid in icing conditions, as described above.

The invention further comprises a method for quantitative blockage analysis of a grid in icing conditions, comprising the following steps:

a) capturing a series of pictures of a grid by using an optical sensor and submitting each picture of the series of pictures to a processor unit;
b) determining a color scale value for each of a number of areas in at least a field of each picture;
c) counting a number of areas in a particular field of a particular picture that show a color scale value greater than an absolute reference value; and
d) extrapolating a time remaining until a critical icing condition is reached by using a model of an icing behavior of the grid and the number of areas in the particular field of the particular picture that show a color scale value greater than the absolute reference value counted step c); and
e) displaying a warning signal on a display unit based on the remaining time calculated by using the model in step d).

According to an example, the method comprises calculating the model based on a fitting parameter, wherein the fitting parameter is based on an icing behavior of the grid in an experimental setup or based on at least one picture captured by the optical sensor.

According to another example, the method further comprises a displaying step for displaying an icing signal on the display unit, the icing signal being indicative of the number of areas that show a color scale value greater than the absolute reference value.

According to an additional example, the method comprises the following steps:

f) calculating, by the processor unit, a time until a critical performance loss of the engine, based on a rate of change of the at least one differential pressure signal.

According to another example, the method comprises the following steps:

g) generating, by the processor unit, a performance signal being indicative of at least the time until the critical performance loss of the engine calculated in step f);
h) submitting the performance signal to the display unit; and
i) displaying, by the display unit, the performance signal submitted by the processor unit in step h).

BRIEF DESCRIPTION OF THE FIGURES

Other characteristics, advantages and potential applications of the present invention result from the following description of the exemplary embodiments illustrated in the figures. In this respect, all described and/or graphically illustrated characteristics also form the object of the invention individually and in arbitrary combination regardless of their composition in the individual claims or their references to other claims. Furthermore, identical or similar objects are identified by the same reference symbols in the figures.

Fig. 1 illustrates an exemplary embodiment of an analysis system for quantitative blockage analysis of a grid in icing conditions.

Fig. 2 shows an exemplary embodiment of a method for calculating a time remaining until a critical icing condition is reached.

Fig. 3 shows an exemplary embodiment of a method for quantitative blockage analysis of a grid in icing conditions.

Fig. 4 shows a cross sectional view of an aircraft engine with an exemplary embodiment of an analysis system.

Fig. 5 shows an exemplary embodiment of a picture of a grid in icing conditions displayed on a display unit.

Fig. 6 shows an example of an analysis system.

Fig. 7 shows a diagram for calculation of a differential pressure signal according to an example.

DETAILED DESCRIPTION OF THE DRAWINGS

In an aspect, the present invention relates to an analysis system for quantitative blockage analysis of a grid in icing conditions by using an optical sensor, such as a grey scale camera and by counting areas in pictures captured by the optical sensor that show a color scale value that is greater than a background represented by a reference value. In other words, the optical sensor is used to detect iced areas based on a difference between color scale values of the iced areas, which are mostly white, and a background color.

Based on the detected iced areas, a model of growth of the iced areas may be calculated. The model may be used to calculate a time remaining until reaching a critical condition, such as a total blockage or total icing of a particular grid is reached.

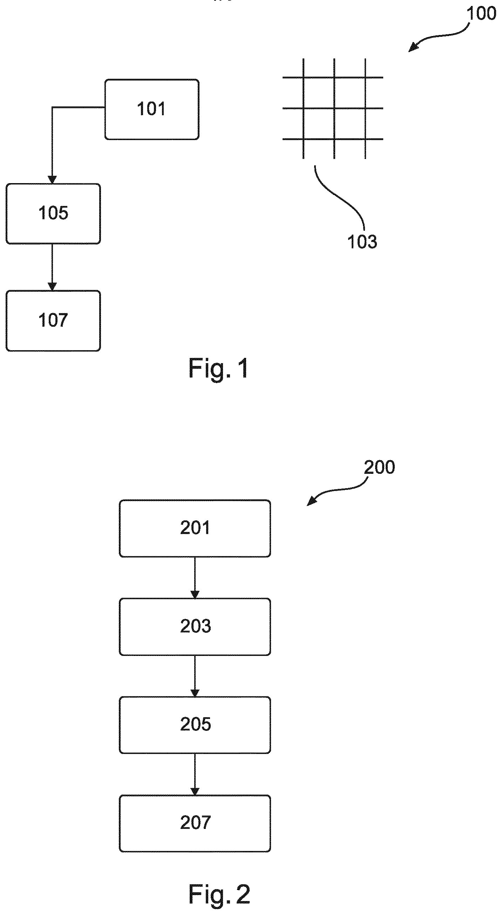

Fig. 1 shows an exemplary embodiment of an analysis system 100 for quantitative blockage analysis of a grid 103 in icing conditions.

The analysis system 100 comprises an optical sensor 101, such as an endoscopic camera, a processor unit 105 and a display unit 107.

The optical sensor is oriented parallel to an airflow in order to acquire images in a direction parallel to the airflow towards the grid 103.

The optical sensor may be connected to the processor unit 105 with a communication interface, such as a cable or a wireless connection.

The optical sensor 101 submits data of images captured by the optical sensor 101 to the processor unit 105 via the communication interface.

The processor unit 105 performs an analysis algorithm that continuously processes the images acquired by the optical sensor 101.

The analysis algorithm determines a color scale value for each area of a number of areas, such as a pixel in at least one field of each picture of a series of pictures. This means, for every area in a field of a particular picture submitted to the processor unit 105, a color scale value is determined based on the data submitted by the optical sensor 101.

Further, the analysis algorithm counts a number of areas in the at least one field of a particular picture that show a color scale value greater than an absolute reference value. This means that the analysis algorithm compares every color scale value of every area with a respective reference value and, if the color scale value of a particular area is greater than the absolute value of the reference value, the analysis algorithm counts the area as "+1", for example. Of course, the value of the area that is counted may vary depending on a differential value of the color scale value of the area and the reference value, for example.

In an example, all color scale values that are in a range between "0" and a particular reference value, are not considered as ice or as background and all color scale values that are in a range between a particular reference value and "255" are considered as ice.

The color scale value determined for every area may be a grey scale value, particularly a grey scale value of a grey scale with a range between "0" and "255".

In another example, the reference value may be calculated from any image of a series of pictures by using a so called "Otsu method" or may be set manually by a user.

By counting the number of areas that are considered, i. e. classified as ice, an icing or blocking condition of the grid 103 is determined. This icing condition may be used to calculate a warning signal indicative of a time remaining until total blockage is reached.

The warning signal may be calculated using a model that is based on a particular fitting parameter determined for the particular grid 103. The particular fitting parameter for the particular grid may be determined in an experimental setup or based on pictures or values determined by the optical sensor 101 during a flight, for example.

Based on the warning signal displayed on the display unit 107, a pilot can check the time remaining until a critical icing condition, such as a total blockage is reached.

Fig. 2 shows an exemplary embodiment of a method for calculating a warning signal indicative of a time remaining until total critical blockage of a particular grid.

Based on information about an icing behaviour, a value of a fitting parameter "A" is calculated in finding step 201 by using equation (1) at a given time "t" and a blockage "y". As soon as fitting parameter "A" is calculated, it is used to model the icing behaviour of a particular grid to be analysed.

For finding the fitting parameter "A" equation (1) may be used based on an icing behavior that was measured in an experimental setup for example. Of course, fitting parameter "A" may also be found based on blockage values "$y$" determined for numerous timestamps during a flight, for example. This means, that fitting parameter "A" me be found by using equation (1) and at least one blocking value "y" determined at an early stage of an icing process, such as a time window of 200 seconds after an icing of a particular grid has been detected for the first time, for example. Fitting parameter "A" may be calculated by using only one blockage value determined at one timestamp or by using a function of numerous blocking values determined at numerous timestamps.

$$y = 1 - e^{-At} \qquad (1)$$

By fitting the factor "A" in a model based on equation (2), a future icing behaviour of the grid is extrapolated, i. e. modelled in modelling step 203. By finding a final time "$t_f$" where a critical icing condition, such as a blocking condition of 85% or 100%, for example, is reached, the time remaining until this critical icing condition is reached, can be determined in determination step 205 for a given timestamp "t".

$$y = 1 - \left(\frac{t_f - t}{t_f}\right) e^{-At} \qquad (2)$$

In equation (2) "$y$" is the blockage value, "$t_f$" is the final time, where a critical condition, such as 100% blockage or a blockage value = 1 is reached, and "$t$" is a given timestamp in seconds, for example.

As soon as the remaining time has been calculated, the processing unit previously used for the calculating the remaining time or any other processing unit or transmitter may be used to transmit a signal to a display unit that will cause the display unit to display the remaining time in a displaying step 207.

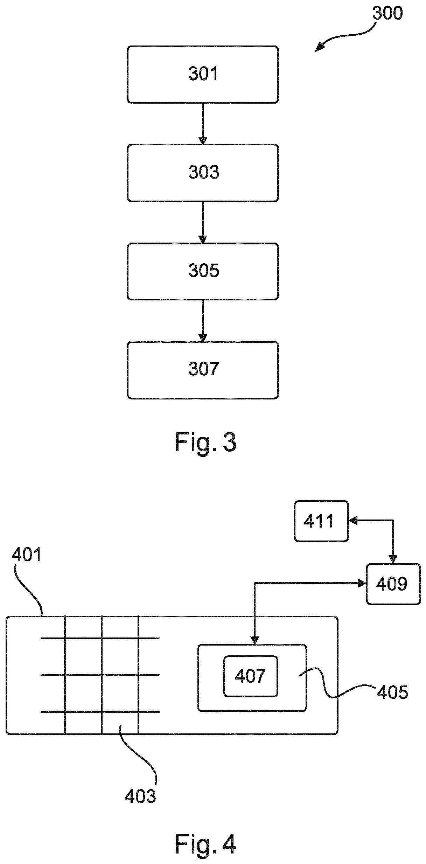

FIG. 3 shows a method 300 for quantitative blockage analysis of a grid in icing conditions. The method may be implemented by an analyzing algorithm as described in connection with FIG. 1.

Starting at a capturing step 301, one or more pictures of a grid are captured by using an optical sensor. Further, each picture is submitted to a processor unit.

In determination step 303, color scale values for each of a number of areas in at least one field of each picture are determined.

In counting step 305, a number of areas in a particular field of a particular picture that show a color scale value greater than an absolute reference value is counted based on the color scale values determined in determination step 303.

In displaying step 307, a warning signal is displayed on a display unit. The warning signal being indicative of a time remaining until a critical icing condition is reached, calculated using on a model of an icing behavior of the grid. The model being calculated based on the number of areas that show a color scale value greater than the absolute reference value counted in counting step 305.

FIG. 4 shows a cross sectional view of an aircraft engine 401 with an air-intake protection grid 403. The aircraft engine 401 comprises an analysis system 405 with an optical sensor 407 that communicates with a processor unit 409. The processor unit 409 communicates with a display unit 411.

The processor unit 409 und the display unit 411 may be localized inside an aircraft carrying the aircraft engine 401.

The processor unit 409 is configured to perform the method described in connection with FIG. 3 based on pictures captured by the optical sensor 407. This means, that a user, such as a pilot, may supervise an icing condition of the grid 403 by supervising a warning and/or an icing signal displayed on the display unit 411. Respectively, the user may control the aircraft engine 401 or the aircraft depending on the warning signal and/or the icing signal to change the icing condition of the grid 403 based on the information shown on the display unit 411. For example, the user may heat up the aircraft engine 401 to avoid further icing of the grid 403.

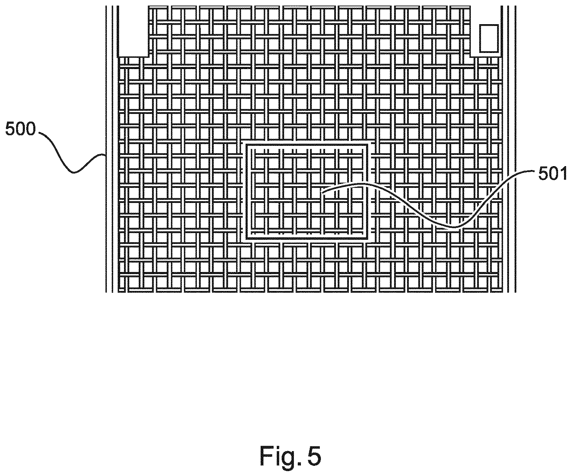

FIG. 5 shows an exemplary embodiment of an illustration of a grid icing condition displayed on first part of a display unit.

In FIG. 5, a picture 500 of a grid captured by a camera as described in connection with FIGS. 1 to 4 is displayed on a display unit.

For quantification of the icing of the gird shown in picture 500, a field of interest 501 is selected in the picture 500.

Afterwards, a color scale value is determined for every pixel in the field of interest 501 and compared with a reference value and all areas that show a color scale value that is greater than an absolute value of the reference value are considered, i. e. classified, as ice.

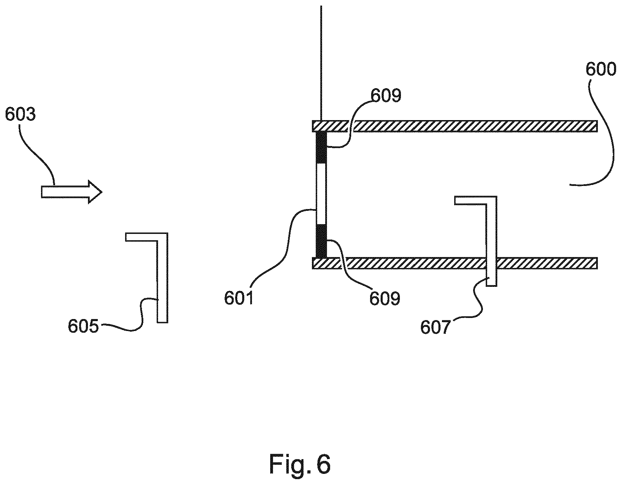

In FIG. 6, an air-intake 600 of an engine of an aircraft is shown. The air-intake 600 comprises a grid 601 for protection of an engine sucking air through the air-intake 600. An airstream flows into the air-intake 600 in a direction indicated by arrow 603.

A first sensor 605 of the aircraft, such as a pitot probe, is arranged upstream of the grid 601 and a second sensor 607 is arranged downstream of the grid 601. The first sensor 605 measures a pressure of the airstream towards the grid 601 and the second sensor 607 measures a pressure of an airstream that has passed the grid 601. Since the pressure of the airstream that has passed the grid 601 will be lower than the pressure of the airstream towards the grid 601, in case the grid 601 shows a blockage 609, the engine will show a performance loss.

The performance of the engine can be determined by calculating a differential pressure signal between a pressure determined by the first sensor 605 and a pressure determined by the second sensor 607. In other words, if the second sensor 607 measures a pressure that is lower than the pressure measured by the first sensor 605, the engine will show a performance loss. Of course, the first sensor 605 can be attached anywhere in front, i. e. upstream of the grid 601, such as in a hull of the aircraft powered by the engine, for example. This means, any pressure sensor of the aircraft may be used as the first sensor.

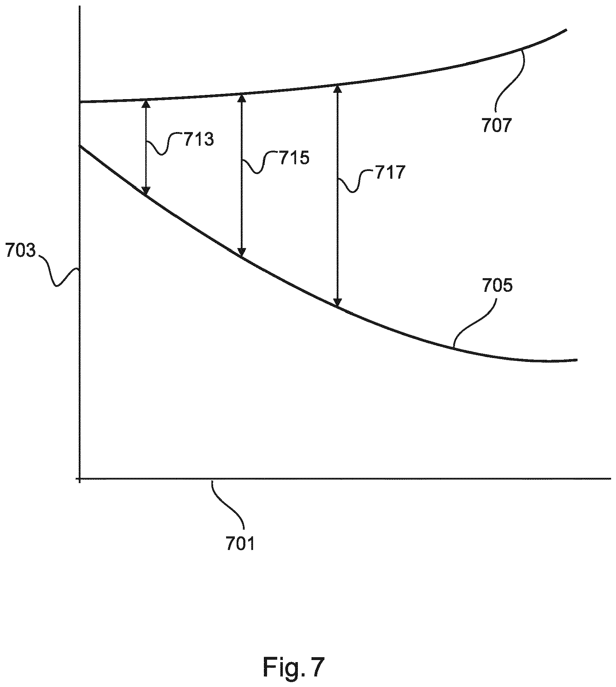

In Fig. 7 a diagram 700 is shown. On the x-axis 701, a time scale, for example in [seconds] and on the y-axis 703 a pressure, for example in [mbar] is shown. Line 705 is a downstream pressure measured by a pressure sensor downstream of an air-intake grid for protection of an engine. Line 707 is a total pressure measured by a pressure sensor upstream of the grid.

Differential pressure signals 713, 715 and 717 are calculated between the downstream pressure 705 and the total pressure 707 measured upstream. In an example, differential pressure signals 713, 715 and 717 are each calculated at a certain time, namely when the pressure sensor used for measuring the downstream pressure 705 is turned from a first position to a second position facing the grid.

In case the pressure sensor used for measuring the downstream pressure 705 is turned in the second position, the pressure sensor is turned back from the second position to the first position after a given sampling time. The "sampling time" may be chosen to avoid icing of the pressure sensor. Thus, the duration of the sampling time may be chosen dependent from particular test conditions.

In the second position, the pressure sensor used for measuring the downstream pressure 705 may measure a total pressure resulting in stronger signals compared to signals determined when the pressure sensor is in the first position for measuring a stationary pressure.

In another example, the pressure sensor used for measuring the downstream pressure 705 may be heated instead of moving the pressure sensor from the first position to the second position and vice versa. Thus, a sampling time window for calculation of a differential pressure signal may start as a temperature of the pressure sensor reaches a given threshold, for example.

It is preferred to calculate the differential pressure signals 713, 715 or 717 only for time windows, in which the pressure sensor faces the grid or a temperature of the pressure sensor has reached the pre-given threshold.

For calculation of a particular differential pressure signal, each value determined during a sampling time window, such as a time when the downstream pressure sensor is facing the grid or a temperature of the pressure sensor has reached the pre-given threshold, is compared to a respective value measured from the pressure sensor upstream of the grid. Alternatively, all values determined in a sampling time window may be averaged and compared to averaged values determined by the pressure sensor upstream of the grid in the sampling time window.

Any mathematical comparison method, such as a division or a subtraction, for example, may be used to calculate the differential pressure signals 713, 715 and 717.

Since in the example shown in FIG. 7, the differential pressure signals 713, 715 and 717 are decreasing over time, less air is streaming through the grid and a performance of an engine protected by the grid is decreasing.

Based on the differential pressure signals 713, 715 and 717 a time until a critical power loss occurs can be predicted by extrapolating values of the downstream pressure 705 in the future. For this purpose, a slope of the differential pressure signals 713, 715 and 717 may be calculated.

Based on the time until the critical power loss, which is determined via the extrapolated values of the downstream pressure 705, a performance signal may be generated. The performance signal may be indicative of the time remaining until the critical power loss of the engine occurs. The performance signal may be displayed on a display unit. Thus, the performance signal may be shown as a timer on the display unit.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments may also be used in combination with other characteristics or steps of other exemplary embodiments described above. Reference characters in the claims are not to be interpreted as limitations.

## Claims

1. An analysis system (100) for quantitative blockage analysis of a grid in icing conditions, comprising

   - at least one optical sensor (101, 407),
   - a processor unit (105, 409), and
   - a display unit (107, 411),

   wherein the at least one optical sensor is configured to continuously capture a series of pictures of a grid (103, 403, 601) and to submit each picture of the series of pictures to the processor unit,
   wherein the processor unit is configured to determine a color scale value for each of a number of areas in at least a field of each picture, and
   wherein the processor unit is configured to count a number of areas in a particular field (501) of a particular picture (500) that show a color scale value greater than an absolute reference value,
   wherein the processor unit is configured to calculate a time remaining until a critical icing condition is reached based on a model of an icing behavior of the grid and the number of areas that show a color scale value greater than the absolute reference value, and
   wherein the processor unit is further configured to calculate a warning signal based on the time remaining until the critical icing condition of the grid is reached, and to display the warning signal on the display unit.

2. The analysis system according to claim 1, wherein the processor unit is further configured to display an icing signal on the display unit indicative of the number of areas that show a color scale value greater than the absolute reference value.

3. The analysis system according to claim 1 or 2, wherein the model is based on a fitting parameter determined for the grid, and wherein the fitting parameter for the grid is determined in an experimental setup or based on at least one picture captured by the optical sensor.

4. The analysis system according to any of the previous claims, wherein the processor unit is configured to choose a pixel as an area in a particular field of a particular picture.

5. The analysis system according to any of the previous claims, wherein for each color scale value of a particular area in a particular field of a particular test picture captured under test conditions a corresponding absolute reference value is chosen determined for a corresponding area in a corresponding field of a given reference picture.

6. The analysis system according to claim 2, wherein the processor unit is further configured to calculate the icing signal based on a blockage value calculated as a ratio between a number of areas in a pre-determined blocking field that show a color scale value greater than the absolute reference value and a number of areas in the pre-determined blocking field that show a color scale value smaller than or equal to the absolute reference value.

7. The analysis system according to any of the previous claims,
   wherein the processor unit is configured to monitor and to correct light intensity variations in a particular field of areas to be analyzed between particular pictures of a series of pictures captured by the optical sensor.

8. The analysis system according to any of the previous claims,
   wherein the grid is a grid of an air-intake (600) of an engine,
   wherein the analysis system comprises at least one sensor (607) that is configured for being positioned with respect to a flow direction of an airflow through the grid downstream of the grid;
   wherein the processor unit is configured to determine at least one differential pressure signal (713, 715, 717) between a pressure of an airflow towards the grid and a pressure determined via the at least one sensor positioned downstream of the grid; and
   wherein the processor unit is further configured to calculate a time until a critical performance loss of the engine, based on a rate of change of the at least one differential pressure signal.

9. The analysis system according to claim 8, wherein the processor unit is configured to generate a performance signal being indicative of at least the time until the critical performance loss of the engine and to submit the performance signal to the display unit; and
   wherein the display unit is configured to output the performance signal submitted by the processor unit.

10. The analysis system according to claim 8 or 9, wherein the at least one sensor (607) comprises a heating;
    wherein the heating is configured to warm up the at least one sensor to protect the at least one sensor from icing.

11. An aircraft equipped with a grid (103, 403, 601) and an analysis system (100) according to any of the previous claims for quantitative blockage analysis of the grid in icing conditions.

12. A method for quantitative blockage analysis of a grid in icing conditions, comprising the following steps:

    - capturing (301) a series of pictures of a grid (103, 403) by using an optical sensor (101, 407) and submitting each picture of the series of pictures to a processor unit (105 ,409);
    - determining (303) a color scale value for each of a number of areas in at least a field of each picture;
    - counting (305) a number of areas in a particular field of a particular picture that show a color scale value greater than an absolute reference value, and
    - extrapolating (203) a time remaining until a critical icing condition is reached by using a model of an icing behavior of the grid and the number of areas that show a color scale value greater than the absolute reference value; and
    - displaying (207) a warning signal on a display unit based on the remaining time calculated by using the model.

13. The method according to claim 12,
    wherein the method further comprises:

    - calculating the model based on a fitting parameter,

    wherein the fitting parameter is based on an icing behavior of the grid in an experimental setup.

14. The method according to claim 13,
    wherein the method further comprises:

    - calculating the model based on the fitting parameter,

    wherein the fitting parameter is based on an icing behavior of the grid determined using at least one of the pictures determined by the optical sensor.

15. The method according to any of claims 12 to 14, wherein the grid is a grid (601) of an air-intake of an engine, and
    wherein the method comprises the following steps:

    - calculating, by the processor unit, at least one differential pressure signal (713, 715, 717) between a pressure of an airflow towards the grid and a pressure determined via at least one sensor (607) positioned downstream of the grid;
    - calculate a time until a critical performance loss of the engine, based on a rate of change of the at least one differential pressure signal.

16. The method according to claim 15, the method further comprising:

   - calculating, by the processor unit, a performance signal being indicative of a time until a critical performance loss of the engine, based on a rate of change of the at least one differential pressure signal;
   - submitting the performance signal, by the processor unit, to a display unit; and
   - displaying the performance signal on the display unit.

17. The method according to any of claims 12 to 16, wherein the method further comprises:

   - displaying an icing signal on the display unit, the icing signal being indicative of the number of areas that show a color scale value greater than the absolute reference value

18. The method according to any of claims 12 to 17, wherein the method further comprises:

   - displaying an ice-warning signal on the display unit, if the time calculated by using the model reaches a pre-given ice-warning value.

19. The method according to any of claims 12 to 18, wherein the method further comprises:

   - displaying a performance-warning signal on the display unit, if the performance calculated by the processor unit reaches a pre-given performance-warning value.

20. A computer program element for controlling an apparatus according to one of the claims 1 to 11 2 , which, when being executed by a processing unit, is adapted to perform the method steps according to one of claim 12 to 19.

21. A computer readable medium having stored the program element of claim 2. 20.

**Patentansprüche**

1. Analysesystem (100) zur quantitativen Blockierungsanalyse eines Gitters in Vereisungsbedingungen, das Folgendes umfasst:

   - wenigstens einen optischen Sensor (101, 407),
   - eine Prozessoreinheit (105, 409) und
   - eine Anzeigeeinheit (107, 411),

wobei der wenigstens eine optische Sensor dazu konfiguriert ist, eine Reihe von Bildern eines Gitters (103, 403, 601) kontinuierlich zu erfassen und jedes Bild der Reihe von Bildern an die Prozessoreinheit zu übermitteln,

wobei die Prozessoreinheit dazu konfiguriert ist, einen Farbskalenwert für jeden einer Anzahl an Bereichen in wenigstens einem Feld jedes Bildes zu bestimmen, und

wobei die Prozessoreinheit dazu konfiguriert ist, eine Anzahl an Bereichen in einem speziellen Feld (501) eines speziellen Bildes (500) zu zählen, die einen Farbskalenwert größer als ein absoluter Referenzwert zeigen,

wobei die Prozessoreinheit dazu konfiguriert ist, eine Zeit, die verbleibt, bis eine kritische Vereisungsbedingung erreicht ist, basierend auf einem Modell eines Vereisungsverhaltens des Gitters und der Anzahl an Bereichen, die einen Farbskalenwert größer als der absolute Referenzwert zeigen, zu berechnen, und

wobei die Prozessoreinheit ferner dazu konfiguriert ist, ein Warnsignal basierend auf der Zeit zu berechnen, die verbleibt, bis die kritische Vereisungsbedingung des Gitters erreicht ist, und das Warnsignal auf der Anzeigeeinheit anzuzeigen.

2. Analysesystem nach Anspruch 1, wobei die Prozessoreinheit ferner dazu konfiguriert ist, ein Vereisungssignal auf der Anzeigeeinheit anzuzeigen, das indikativ für die Anzahl an Bereichen ist, die einen Farbskalenwert größer als der absolute Referenzwert zeigen.

3. Analysesystem nach Anspruch 1 oder 2, wobei das Modell auf einem Fitting-Parameter basiert, der für das Gitter bestimmt wird, und wobei der Fitting-Parameter für das Gitter in einem experimentellen Aufbau oder basierend auf wenigstens einem Bild, das durch den optischen Sensor erfasst wird, bestimmt wird.

4. Analysesystem nach einem der vorhergehenden Ansprüche, wobei die Prozessoreinheit dazu konfiguriert ist, ein Pixel als einen Bereich in einem speziellen Feld eines speziellen Bildes zu wählen.

5. Analysesystem nach einem der vorhergehenden Ansprüche, wobei für jeden Farbskalenwert eines speziellen Bereichs in einem speziellen Feld eines speziellen Testbildes, das unter Testbedingungen erfasst wurde, ein entsprechender absoluter Referenzwert gewählt wird, der für einen entsprechenden Bereich in einem entsprechenden Feld eines gegebenen Referenzbildes bestimmt wird.

**6.** Analysesystem nach Anspruch 2, wobei die Prozessoreinheit ferner dazu konfiguriert ist, das Vereisungssignal basierend auf einem Blockierungswert zu berechnen, der als ein Verhältnis zwischen einer Anzahl an Bereichen in einem vorbestimmten Blockierungsfeld, die einen Farbskalenwert größer als der absolute Referenzwert zeigen, und einer Anzahl an Bereichen in dem vorbestimmten Blockierungsfeld, die einen Farbskalenwert kleiner als der oder gleich dem absoluten Referenzwert zeigen, berechnet wird.

**7.** Analysesystem nach einem der vorhergehenden Ansprüche, wobei die Prozessoreinheit dazu konfiguriert ist, Lichtintensitätsvariationen in einem speziellen Feld von zu analysierenden Bereichen zwischen speziellen Bildern einer Reihe von Bildern, die durch den optischen Sensor erfasst werden, zu überwachen und zu korrigieren.

**8.** Analysesystem nach einem der vorhergehenden Ansprüche, wobei das Gitter ein Gitter eines Lufteinlasses (600) eines Triebwerks ist, wobei das Analysesystem wenigstens einen Sensor (607) umfasst, der dazu konfiguriert ist, mit Bezug auf eine Flussrichtung eines Luftflusses durch das Gitter stromabwärts von dem Gitter positioniert zu werden; wobei die Prozessoreinheit zum Bestimmen wenigstens eines Differentialdrucksignals (713, 715, 717) zwischen einem Druck eines Luftflusses zu dem Gitter hin und einem Druck, der über den wenigstens einen stromabwärts von dem Gitter positionierten Sensor bestimmt wird, konfiguriert ist; und wobei die Prozessoreinheit ferner zum Berechnen einer Zeit bis zu einem kritischen Leistungsfähigkeitsverlust des Triebwerks basierend auf einer Änderungsrate des wenigstens einen Differentialdrucksignals konfiguriert ist.

**9.** Analysesystem nach Anspruch 8, wobei die Prozessoreinheit zum Erzeugen eines Leistungsfähigkeitssignals, das wenigstens die Zeit bis zu dem kritischen Leistungsfähigkeitsverlust des Triebwerks angibt, und zum Übermitteln des Leistungsfähigkeitssignals an die Anzeigeeinheit konfiguriert ist; und wobei die Anzeigeeinheit zum Ausgeben des durch die Prozessoreinheit übermittelten Leistungsfähigkeitssignals konfiguriert ist.

**10.** Analysesystem nach Anspruch 8 oder 9, wobei der wenigstens eine Sensor (607) eine Heizung umfasst; wobei die Heizung zum Erwärmen des wenigstens einen Sensors konfiguriert ist, um den wenigstens einen Sensor vor einer Vereisung zu schützen.

**11.** Luftfahrzeug, das mit einem Gitter (103, 403, 601) und einem Analysesystem (100) nach einem der vorhergehenden Ansprüche zur quantitativen Blockierungsanalyse des Gitters in Vereisungsbedingungen ausgerüstet ist.

**12.** Verfahren zur quantitativen Blockierungsanalyse eines Gitters in Vereisungsbedingungen, das die folgenden Schritte umfasst:

- Erfassen (301) einer Reihe von Bildern eines Gitters (103, 403) durch Verwenden eines optischen Sensors (101, 407) und Übermitteln jedes Bildes der Reihe von Bildern an eine Prozessoreinheit (105, 409);
- Bestimmen (303) eines Farbskalenwertes für jeden einer Anzahl an Bereichen in wenigstens einem Feld jedes Bildes;
- Zählen (305) einer Anzahl an Bereichen in einem speziellen Feld eines speziellen Bildes, die einen Farbskalenwert größer als ein absoluter Referenzwert zeigen, und
- Extrapolieren (203) einer Zeit, die verbleibt, bis eine kritische Vereisungsbedingung erreicht wird, durch Verwenden eines Modells eines Vereisungsverhaltens des Gitters und der Anzahl an Bereichen, die einen Farbskalenwert größer als der absolute Referenzwert zeigen; und
- Anzeigen (207) eines Warnsignals auf einer Anzeigeeinheit basierend auf der verbleibenden Zeit, die durch Verwenden des Modells berechnet wird.

**13.** Verfahren nach Anspruch 12, wobei das Verfahren ferner Folgendes umfasst:

- Berechnen des Modells basierend auf einem Fitting-Parameter,

wobei der Fitting-Parameter auf einem Vereisungsverhalten des Gitters in einem experimentellen Aufbau basiert.

**14.** Verfahren nach Anspruch 13, wobei das Verfahren ferner Folgendes umfasst:

- Berechnen des Modells basierend auf dem Fitting-Parameter,

wobei der Fitting-Parameter auf einem Vereisungsverhalten des Gitters basiert, das unter Verwendung wenigstens eines der Bilder bestimmt wird, die durch den optischen Sensor bestimmt werden.

**15.** Verfahren nach einem der Ansprüche 12 bis 14, wobei das Gitter ein Gitter (601) eines Lufteinlasses eines Triebwerks ist, und wobei das Verfahren die folgenden Schritte umfasst:

- Berechnen, durch die Prozessoreinheit, wenigstens eines Differentialdrucksignals (713, 715, 717) zwischen einem Druck eines Luftflusses zu dem Gitter hin und einem Druck, der über den wenigstens einen stromabwärts von dem Gitter positionierten Sensor (607) bestimmt wird;
- Berechnen einer Zeit bis zu einem kritischen Leistungsfähigkeitsverlust des Triebwerks basierend auf einer Änderungsrate des wenigstens einen Differentialdrucksignals.

16. Verfahren nach Anspruch 15,
wobei das Verfahren ferner Folgendes umfasst:

- Berechnen, durch die Prozessoreinheit, eines Leistungsfähigkeitssignals, das eine Zeit bis zu einem kritischen Leistungsfähigkeitsverlust des Triebwerks angibt, basierend auf einer Änderungsrate des wenigstens einen Differentialdrucksignals;
- Übermitteln des Leistungsfähigkeitssignals, durch die Prozessoreinheit, an eine Anzeigeeinheit; und
- Anzeigen des Leistungsfähigkeitssignals auf der Anzeigeeinheit.

17. Verfahren nach einem der Ansprüche 12 bis 16,
wobei das Verfahren ferner Folgendes umfasst:

- Anzeigen eines Vereisungssignals auf der Anzeigeeinheit, wobei das Vereisungssignal indikativ für die Anzahl an Bereichen ist, die einen Farbskalenwert größer als der absolute Referenzwert zeigen.

18. Verfahren nach einem der Ansprüche 12 bis 17,
wobei das Verfahren ferner Folgendes umfasst:

- Anzeigen eines Eiswarnsignals auf der Anzeigeeinheit, falls die Zeit, die durch Verwenden des Modells berechnet wird, einen vorgegebenen Eiswarnungswert erreicht.

19. Verfahren nach einem der Ansprüche 12 bis 18,
wobei das Verfahren ferner Folgendes umfasst:

- Anzeigen eines Leistungsfähigkeitswarnsignals auf der Anzeigeeinheit, falls die durch die Prozessoreinheit berechnete Leistungsfähigkeit einen vorgegebenen Leistungsfähigkeitswarnwert erreicht.

20. Computerprogrammelement zum Steuern einer Einrichtung nach einem der Ansprüche 1 bis 11, das, wenn es durch eine Verarbeitungseinheit ausgeführt wird, dazu eingerichtet ist, die Verfahrensschritte nach einem der Ansprüche 12 bis 19 durchzuführen.

21. Computerlesbares Medium mit dem gespeicherten Programmelement nach Anspruch 20.

## Revendications

1. Système d'analyse (100) pour l'analyse quantitative de l'obstruction d'une grille dans des conditions de givrage, comprenant :

    - au moins un capteur optique (101, 407),
    - une unité processeur (105, 409), et
    - une unité d'affichage (107, 411),

    dans lequel l'au moins un capteur optique est configuré pour capturer en continu une série d'images d'une grille (103, 403, 601) et pour soumettre chaque image de la série d'images à l'unité processeur,
    dans lequel l'unité processeur est configurée pour déterminer une valeur d'échelle des couleurs pour chacune d'un nombre de zones dans au moins un champ de chaque image, et
    dans lequel l'unité processeur est configurée pour compter un nombre de zones dans un champ particulier (501) d'une image particulière (500) qui présentent une valeur d'échelle des couleurs supérieure à une valeur de référence absolue,
    dans lequel l'unité processeur est configurée pour calculer un temps restant jusqu'à ce qu'une condition de givrage critique soit atteinte sur la base d'un modèle d'un comportement de givrage de la grille et du nombre de zones qui présentent une valeur d'échelle des couleurs supérieure à la valeur de référence absolue, et
    dans lequel l'unité processeur est configurée en outre pour calculer un signal d'avertissement sur la base du temps restant jusqu'à ce que la condition de givrage critique soit atteinte, et pour afficher le signal d'avertissement sur l'unité d'affichage.

2. Système d'analyse selon la revendication 1,
dans lequel l'unité processeur est configurée en outre pour afficher un signal de givrage sur l'unité d'affichage, indiquant le nombre de zones qui présentent une valeur d'échelle des couleurs supérieure à la valeur de référence absolue.

3. Système d'analyse selon la revendication 1 ou 2,
dans lequel le modèle est basé sur un paramètre d'ajustement déterminé pour la grille, et dans lequel le paramètre d'ajustement pour la grille est déterminé dans un montage expérimental ou sur la base d'au moins une image capturée par le capteur optique.

4. Système d'analyse selon l'une quelconque des revendications précédentes,
dans lequel l'unité processeur est configurée pour choisir un pixel en tant que zone dans un champ particulier d'une image particulière.

5. Système d'analyse selon l'une quelconque des revendications précédentes,
dans lequel, pour chaque valeur d'échelle des couleurs d'une zone particulière dans un champ particulier d'une image-test particulière capturée dans des conditions de test, une valeur de référence absolue correspondante est choisie, déterminée pour une zone correspondante dans un champ correspondant d'une image de référence donnée.

6. Système d'analyse selon la revendication 2,
dans lequel l'unité processeur est configurée en outre pour calculer le signal de givrage sur la base d'une valeur d'obstruction calculée sous forme d'un rapport entre un nombre de zones dans un champ d'obstruction prédéterminé qui présentent une valeur d'échelle des couleurs supérieure à la valeur de référence absolue et un nombre de zones dans le champ d'obstruction prédéterminé qui présentent une valeur d'échelle des couleurs inférieure ou égale à la valeur de référence absolue.

7. Système d'analyse selon l'une quelconque des revendications précédentes,
dans lequel l'unité processeur est configurée pour surveiller et pour corriger des variations d'intensité lumineuse dans un champ particulier de zones à analyser entre des images particulières d'une série d'images capturées par le capteur optique.

8. Système d'analyse selon l'une quelconque des revendications précédentes,
dans lequel la grille est une grille d'une admission d'air (600) d'un moteur,
lequel système d'analyse comprend au moins un capteur (607) qui est configuré pour être positionné par rapport à une direction d'écoulement d'un écoulement d'air traversant la grille en aval de la grille ;
dans lequel l'unité processeur est configurée pour déterminer au moins un signal de différence de pression (713, 715, 717) entre une pression d'un écoulement d'air en direction de la grille et une pression déterminée à l'aide de l'au moins un capteur positionné en aval de la grille ; et
dans lequel l'unité processeur est configurée en outre pour calculer un temps jusqu'à une perte de performance critique du moteur sur la base d'un taux de variation de l'au moins un signal de différence de pression.

9. Système d'analyse selon la revendication 8,
dans lequel l'unité processeur est configurée pour générer un signal de performance indiquant au moins le temps jusqu'à la perte de performance critique du moteur et pour soumettre le signal de performance à l'unité d'affichage ; et
dans lequel l'unité d'affichage est configurée pour fournir en sortie le signal de performance soumis par l'unité processeur.

10. Système d'analyse selon la revendication 8 ou 9,
dans lequel l'au moins un capteur (607) comprend un chauffage ;
dans lequel le chauffage est configuré pour échauffer l'au moins un capteur afin de protéger ledit au moins un capteur d'un givrage.

11. Aéronef équipé d'une grille (103, 403, 601) et d'un système d'analyse (100) selon l'une quelconque des revendications précédentes pour l'analyse quantitative de l'obstruction de la grille dans des conditions de givrage.

12. Procédé d'analyse quantitative de l'obstruction d'une grille dans des conditions de givrage, comprenant les étapes suivantes :

- la capture (301) d'une série d'images d'une grille (103, 403) à l'aide d'un capteur optique (101, 407) et la soumission de chaque image de la série d'images à une unité processeur (105, 409) ;
- la détermination (303) d'une valeur d'échelle des couleurs pour chacune d'un nombre de zones dans au moins un champ de chaque image ;
- le comptage (305) d'un nombre de zones dans un champ particulier d'une image particulière qui présentent une valeur d'échelle des couleurs supérieure à une valeur de référence absolue, et
- l'extrapolation (203) d'un temps restant jusqu'à ce qu'une condition de givrage critique soit atteinte à l'aide d'un modèle d'un comportement de givrage de la grille et du nombre de zones qui présentent une valeur d'échelle des couleurs supérieure à la valeur de référence absolue ; et
- l'affichage (207) d'un signal d'avertissement sur une unité d'affichage sur la base du temps restant calculé à l'aide du modèle.

13. Procédé selon la revendication 12,
lequel procédé comprend en outre :

- le calcul du modèle sur la base d'un paramètre d'ajustement,

dans lequel le paramètre d'ajustement est basé sur un comportement de givrage de la grille dans un montage expérimental.

14. Procédé selon la revendication 13,
lequel procédé comprend en outre :

- le calcul du modèle sur la base du paramètre d'ajustement,

dans lequel le paramètre d'ajustement est basé sur un comportement de givrage de la grille déterminé à l'aide d'au moins une des images déterminées par le capteur optique.

**15.** Procédé selon l'une quelconque des revendications 12 à 14,
dans lequel la grille est une grille (601) d'une admission d'air d'un moteur, et
lequel procédé comprend les étapes suivantes :

- le calcul, par l'unité processeur, d'au moins un signal de différence de pression (713, 715, 717) entre une pression d'un écoulement d'air en direction de la grille et une pression déterminée par le biais d'au moins un capteur (607) positionné en aval de la grille ;
- le calcul d'un temps jusqu'à une perte de performance critique du moteur sur la base d'un taux de variation de l'au moins un signal de différence de pression.

**16.** Procédé selon la revendication 15,
le procédé comprenant en outre :

- le calcul, par l'unité processeur, d'un signal de performance indiquant un temps jusqu'à une perte de performance critique du moteur sur la base d'un taux de variation de l'au moins un signal de différence de pression ;
- la soumission du signal de performance, par l'unité processeur, à une unité d'affichage ; et
- l'affichage du signal de performance sur l'unité d'affichage.

**17.** Procédé selon l'une quelconque des revendications 12 à 16,
lequel procédé comprend en outre :

- l'affichage d'un signal de givrage sur l'unité d'affichage, le signal de givrage indiquant le nombre de zones qui présentent une valeur d'échelle des couleurs supérieure à la valeur de référence absolue.

**18.** Procédé selon l'une quelconque des revendications 12 à 17,
lequel procédé comprend en outre :

- l'affichage d'un signal d'avertissement de givre sur l'unité d'affichage si le temps calculé à l'aide du modèle atteint une valeur d'avertissement de givre préalablement donnée.

**19.** Procédé selon l'une quelconque des revendications 12 à 18,

lequel procédé comprend en outre :

- l'affichage d'un signal d'avertissement de performance sur l'unité d'affichage si la performance calculée par l'unité processeur atteint une valeur d'avertissement de performance préalablement donnée.

**20.** Élément de programme d'ordinateur pour la commande d'un appareil selon l'une des revendications 1 à 11, qui, lorsqu'il est exécuté par une unité de traitement, est adapté à réaliser les étapes de procédé selon l'une des revendications 12 à 19.

**21.** Support lisible par ordinateur sur lequel est enregistré l'élément de programme selon la revendication 20.

100

101

105

107

103

Fig. 1

200

201

203

205

207

Fig. 2

300

301

303

305

307

Fig. 3

411

409

401

407

405

403

Fig. 4

500

501

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3061691 A1

- US 20130113926 A1